# EUROPÄISCHE PATENTSCHRIFT

(11) **EP 1 285 733 B1**
(45) Veröffentlichungstag und Bekanntmachung des Hinweises auf die Patenterteilung: **03.10.2007**
(21) Anmeldenummer: 02017622.8
(22) Anmeldetag: 05.08.2002
(51) Int. Cl.: B25J 19/00, B25J 17/02

(54) **Manipulatormaschine mit einer zu dem Arbeitsgerät geführten Leitungsanordnung**
Manipulator provided with a cable arrangement connected to a working tool
Manipulateur pourvu d'un système de conduites connectées à un outil de travail

(30) Priorität: 16.08.2001 DE 10139088; 07.11.2001 DE 10154544
(43) Veröffentlichungstag der Anmeldung: 26.02.2003
(73) Patentinhaber: Dürr Systems GmbH, 70435 Stuttgart (DE)
(72) Erfinder: Giuliano, Stefano, 70839 Gerlingen (DE)
(74) Vertreter: Heusler, Wolfgang

(56) Entgegenhaltungen:
- EP-A- 0 489 966
- EP-A- 0 873 826
- EP-A- 1 201 315
- PATENT ABSTRACTS OF JAPAN vol. 014, no. 010 (M-917), 10. Januar 1990 (1990-01-10) -& JP 01 257592 A (FANUC LTD), 13. Oktober 1989 (1989-10-13)

## Beschreibung

Die Erfindung betrifft eine automatisch gesteuerte mehrachsige Manipulatormaschine mit einem Applikationsgerät gemäß dem Oberbegriff des Anspruchs 1. Insbesondere handelt es sich um einen Roboter oder sonstigen mehrachsigen Bewegungsautomaten für die serienweise Lackierung oder Beschichtung beispielsweise von Kraftfahrzeugkarossen mit einem Rotations- oder Luftzerstäuber oder sonstigen Applikationsgerät, zu dem Versorgungsschläuche für das Beschichtungsmaterial und für Spül- und sonstige Hilfsmedien wie insbesondere Druckluft sowie elektrische, pneumatische und ggf. optische Signalleitungen für Sensoren, Initiatoren, Ventilsteuerungen usw. durch die Maschine führen. Diese Leitungsanordnung ist üblicherweise von außen kommend durch die "Achsen", d.h. die als Hohlwellen ausgebildeten Komponentenglieder und zugehörigen Gelenke der Maschine hindurchgeführt, die für die kinematisch komplizierten Bewegungen während der Beschichtung notwendig sind. Hierfür geeignete Roboter- und Handgelenkkonstruktionen sind bekannt (US 4904148, US 4708580 usw.).

Beispielsweise können sich die drei (üblicherweise als Achse 4, Achse 5 und Achse 6 bezeichneten) Achsen des Handgelenks eines Lackierroboters während des Lackierprozesses mit hohen Drehgeschwindigkeiten relativ zueinander drehen. Innerhalb des aufgrund der Schläuche und sonstigen Leitungen jeweils zugelassenen Verdrehwinkels, der infolge der Addition der Winkelbereiche der drei Achsen bei dem betrachteten Beispiel bis etwa ± 540° betragen kann, erfahren in derartigen Fällen die Leitungen neben den Biegungen eine hohe Torsionsbelastung, die zu Beschädigungen führen, wenn keine Maßnahmen zur Kompensation der Torsionsbeanspruchung getroffen werden.

Zur Kompensation der Torsionsbelastung ist es bekannt, die an den verschiedenen Roboterachsen relativ gegeneinander zu verdrehenden Schlauchteile über Drehdurchführungen zu verbinden. Zur Verbindung der Teile eines einzigen Schlauches genügt hierbei eine koaxiale Mittelbohrung, während für zusätzliche Schläuche jeweils Durchführungen über Ringkanäle erforderlich sind, die über Gleitringdichtungen abgedichtet sind. Diese ein- bzw. mehrkanaligen Drehdurchführungen können aber nicht das gegenseitige Verdrillen mit sonstigen Leitungen ausschließen, die nicht ohne weiteres in sich selbst drehbar angeordnet werden können, wozu u.a. elektrische Leitungen und beispielsweise auch Lichtwellenleiter gehören. Deswegen können trotz der Drehdurchführungen nur begrenzte Verdrehwinkel des Handgelenks und der sonstigen Komponentenglieder der Maschine zugelassen werden, was u.a. unerwünschte Drehrichtungswechsel eines Zerstäubers beim Lackieren zur Folge hat. Bei dieser Umorientierung geht wertvolle Produktionszeit verloren, und zur Vermeidung von Beschichtungsfehlern kann bei diesem Beispiel zudem jeweils ein Abschalten des Sprühstrahls mit dem damit verbundenen unerwünschten "Overspray" (Sprühen am Werkstück vorbei) erforderlich sein.

Ein weiterer Nachteil bekannter Drehdurchführungen besteht darin, dass erhebliche Drehmomente auftreten können, die u. U. nicht überwunden werden, so dass die entsprechenden Torsionskräfte nicht kompensiert, sondern doch wieder von der Leitungsanordnung aufgenommen werden.

Ein anderes Problem ergibt sich daraus, dass Farblack und sonstiges Beschichtungsmaterial häufig gewechselt wird und die zugehörigen Schlauchleitungen dann jeweils gespült werden müssen. Da die bekannten Durchführungen große Toträume enthalten, können sie nur schwer und nur mit erheblichem Zeit- und Prozessaufwand gespült werden.

Für manche Anwendungsfälle hatten die bekannten Drehdurchführungen außerdem wegen der erforderlichen Dichtungskonstruktionen auch zu großen Platzbedarf und zu hohes Gewicht, was besonders bei Lackierrobotern unerwünscht ist.

Ähnliche Probleme können auch bei anderen Manipulatormaschinen für an Schlauch- und/oder sonstige Leitungen angeschlossene Arbeitsgeräte auftreten.

JP-A 01257592 offenbart einen Roboter mit einer Handgelenkkonstruktion, an der relativ zu ihr drehbar ein zu einer zentralen Achse symmetrisches Werkzeug und eine mit diesem verbundene, vor Torsion zu bewahrende Leitung gelagert sind.

Der Erfindung liegt die Aufgabe zugrunde, eine Manipulatormaschine anzugeben, die eine zu Schäden führende Torsionsbelastung der Leitungsanordnung des zu bewegenden Applikationsgerätes ohne Begrenzung der Verdrehwinkel der Komponentenglieder vermeidet.

Diese Aufgabe wird durch die Merkmale des unabhängigen Patentanspruchs gelöst.

Durch die Erfindung wird im Prinzip eine zentrale Drehdurchführung für alle zu dem Arbeitsgerät geführten Schläuche und sonstigen Leitungen realisiert, die unabhängig von deren Anzahl und Funktionen ist und die gesamte Leitungsanordnung von den Drehbewegungen der Komponentenglieder der Maschine entkoppelt. Im Fall von Zerstäubern werden also über diese Drehdurchführung insbesondere auch die aus dem Zerstäuber austretenden Medien wie Farbe und Luft von den Drehbewegungen entkoppelt.

Durch die Erfindung kann die bisher notwendige Beschränkung des Verdrehwinkels beispielsweise des Handgelenks eines Roboters entfallen. Die "Achsen" des Handgelenks und ggf. sonstige "Achsen" der Maschine können ohne wesentliche Torsionsbelastung der durch sie hindurchgeführten Leitungsanordnung endlos in eine Richtung drehen, da die Leitungsanordnung allenfalls gebogen wird. Beim programmgesteuerten Abfahren der Werkstücke ist daher keine Umorientierung mit entsprechenden Stillstandszeiten und den oben erwähnten Nachteilen erforderlich. Durch die erfindungsgemäß erreichte Schonung der Schlauch- und sonstigen Leitungen ergeben sich ferner hohe Standzeiten und hohe Betriebssicherheit entsprechend der verringerten Gefahr von Beschädigungen der Leitungen.

Soweit infolge der erforderlichen Drehlager und ggf. vorhandener Gleitringdichtungen Drehmomente auftreten, sind sie so gering, dass sie in vielen Fällen problemlos von der Leiteranordnung selbst aufgenommen werden können. In anderen Fällen kann es zweckmäßig sein, eine dünne flexible Welle zum Aufnehmen von Drehmomenten parallel zu der Leitungsanordnung durch die Komponentenglieder der Maschine zu führen und an dem drehbar gelagerten Teil des Arbeitsgerätes zu befestigen.

Der an die Leitungsanordnung angeschlossene Teil des Arbeitsgerätes kann zweckmäßig in einem Außengehäuse gelagert sein, bei dem es sich entweder um das Endglied der Maschinenkomponenten (Roboterachsen) selbst oder um ein starr an diesem Endglied angebrachtes Gehäuse eines an sich konventionellen Arbeitsgerätes handeln kann.

An den in der Zeichnung dargestellten Ausführungsbeispielen wird die Erfindung näher erläutert. Es zeigen
- Fig. 1: das Handgelenk eines Lackierroboters mit einem Rotationszerstäuber;
- Fig. 2: den Rotationszerstäuber gemäß Fig. 1 in vergrößertem Maßstab;
- Fig. 3: einen Luftzerstäuber mit drehbar gelagertem Innenteil;
- Fig. 4: eine andere Ausführungsform eines Luftzerstäubers mit drehbar gelagertem Innenteil; und
- Fig. 5 und 5A: eine der nach Fig. 4 ähnliche, aber abgewandelte Ausführungsform.

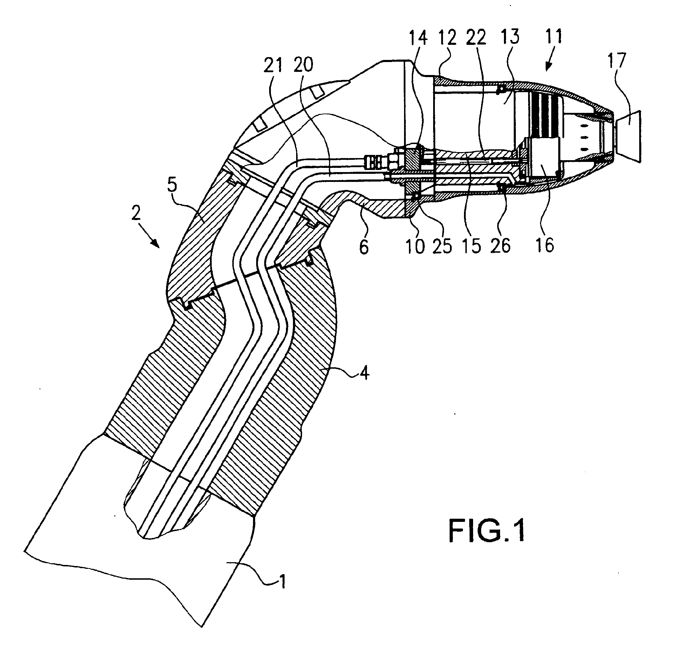

Gemäß Fig. 1 ist an dem als Hohlwelle ausgebildeten Arm 1 eines Lackierroboters ein ebenfalls hohles Handgelenk 2 konventioneller Konstruktion mit den üblichen drei von je einem (nicht sichtbaren) Motor angetriebenen, relativ zueinander verdrehbaren "Achsen" 4, 5 und 6 montiert, wobei die "Achse" 4 relativ zu dem Arm 1 um dessen Längsachse drehbar ist. Am Ende der das Endglied des Roboters bildenden "Achse" 6 ist der Außenflanschring 10 eines Hochrotationszerstäubers 11 an sich konventioneller modularer Bauart (z. B. gemäß DE 4306800 A1) befestigt. Der Rotationszerstäuber besteht aus einem Außengehäuse 12 und einem allgemein mit 13 bezeichneten Innenteil, zu dem hauptsächlich ein Innenflanschteil 14, der Ventilblock 15, die Luftturbine 16 und die auf der rotierenden Turbinenwelle befestigte Zerstäuberglocke 17 gehören. Durch den Arm 1 und das Handgelenk 2 verlaufen die an den Innenteil 13 des Rotationszerstäubers angeschlossenen und an ihm befestigten zahlreichen Schläuche und Leitungen für Farblack, Lösemittel, Luft, Signale usw., die allgemein durch die als Luftleitung dienende Leitung 20 repräsentiert sind. Zusätzlich ist ein Lichtwellenleiter 21 dargestellt, der über einen Lichtleitstab 22 an einen optischen Sensor für die Turbinendrehzahl angeschlossen ist.

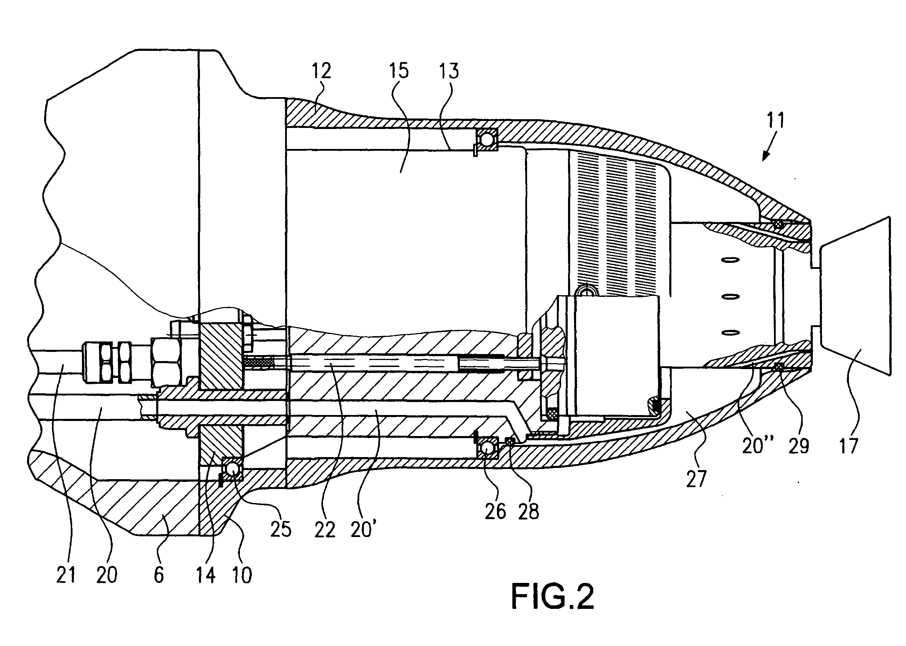

Der Innenteil 13 ist als ganzes in dem Außengehäuse 12 um die Längsachse des Zerstäubers 11, hier also um die Rotationsachse der Zerstäuberglocke 17 drehbar gelagert, wie nachfolgend anhand von Fig. 2 erläutert wird. Das Außengehäuse 12 ist seinerseits über den Außenflanschring 10 starr an der "Achse" 6 des Handgelenks 2 befestigt, so dass dessen Bewegungen über die Drehlager 25, 26 auf die Zerstäuberglocke 17 übertragen werden. Wie schon erläutert wurde, sind hierbei erfindungsgemäß die Bewegungsachsen des Roboters lediglich an den Auslenkungen des Spritzstrahls der Zerstäuberglocke 17 beteiligt, während die an den Rotationszerstäuber angeschlossene Leitungsanordnung 20, 21 von der resultierenden Drehbewegung der Roboterachsen entkoppelt ist. Gegen Mitdrehen des Innenteils 13 bei den von der Roboterachse bewirkten Drehungen des Außengehäuses 12 wird der Innenteil 13 durch die Leitungsanordnung und insbesondere deren Schläuche und/oder eventuell durch eine zum Aufnehmen von Drehmomenten geeignete (nicht dargestellte) dünne flexible Welle festgehalten.

Bei dem betrachteten Beispiel sitzt das erste Drehlager 25 zwischen dem starr mit dem zylindrischen Gehäuse 12 verbundenen ebenfalls zylindrischen Außenflanschring 10 und dem starr mit dem Innenteil 13 verbundenen kreisscheibenförmigen Innenflanschteil 14. Das zweite Drehlager 26 kann beispielsweise darstellungsgemäß zwischen der zylindrischen Außenseite des Ventilblocks 15 und der Innenwand des Gehäuses 12 angeordnet sein.

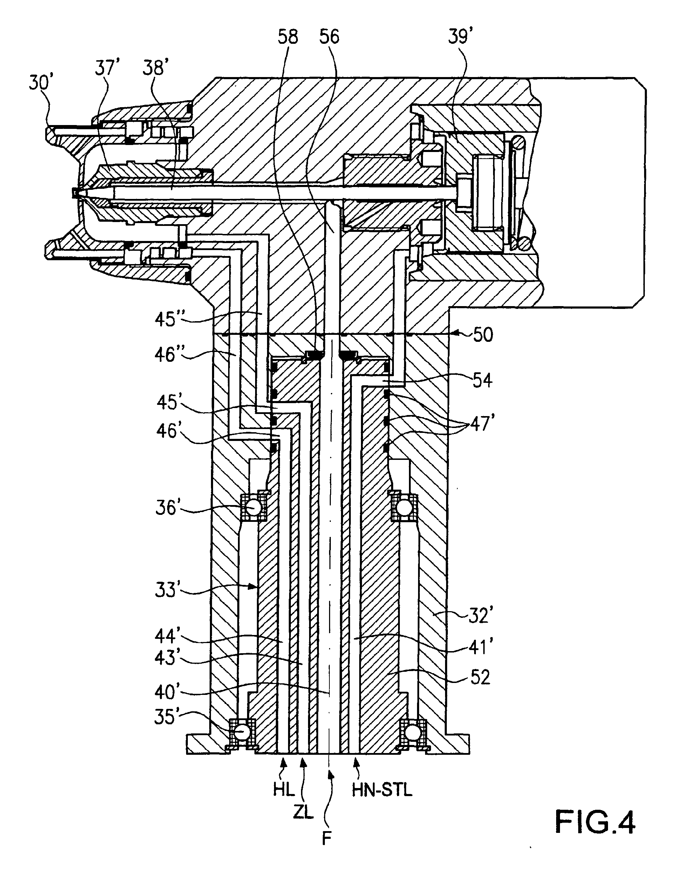

Bei dem hier beschriebenen Lackierroboter ist ersichtlich keine drehende Abdichtung innerhalb der vom Beschichtungsmaterial durchflossenen (nicht dargestellten) Leitung erforderlich, doch sind auch Fälle denkbar, bei denen es zweckmäßig sein kann, diese Leitung aus innerhalb des Zerstäubers relativ zueinander drehbaren Teilen zu gestalten (vgl. Fig. 4). In jedem Fall werden aber alle Anschlüsse für Medien, die durch den Zerstäuber hindurch nach außen geleitet werden sollen, von den Drehbewegungen der Roboterkomponentenglieder um deren jeweilige Längsachsen entkoppelt.

Hochrotationszerstäuber benötigen neben der Farbleitung für das Beschichtungsmaterial noch eine oder mehrere weitere Leitungen für nach außen zu leitende Medien, insbesondere für die den Sprühstrahl steuernde Lenkluft. Gemäß dem dargestellten Beispiel kann die Lenkluft über einen abgedichteten Ringkanal 27 zwischen der Außenseite des Innenteils 13 und der Innenwand des Außengehäuses 12 von den Drehbewegungen der Roboterachsen entkoppelt werden. Zur Abdichtung sind zwei radial innen und außen an den betreffenden Flächen anliegende Gleitring- oder sonstige gleitende Dichtungen 28 und 29 vorgesehen, die beispielsweise aus einem gummielastischen 0-Ring in Kombination mit einem Telefon-Gleitring bestehen können, wie es bei konventionellen Mehrkanal-Drehdurchführungen an sich bekannt ist (Fa. Deublin GmbH). Die erste Gleitringdichtung 28 sitzt hier neben dem Drehlager 26 auf dessen der Glocke 17 zugewandten Seite, während die zweite Gleitringdichtung 29 in der Nähe des vorderen Endes des Außengehäuses 12 zwischen diesem und dem der Glocke 17 zugewandten vorderen Rand der Gehäuses der Turbine 16 sitzen kann. Der Ringkanal 27 wird von dem an die Leitung 20 angeschlossenen Luftkanal 20' gespeist und mündet über einen weiteren Ringkanal 20'' an der Zerstäuberaußerseite hinter der Glocke 17.

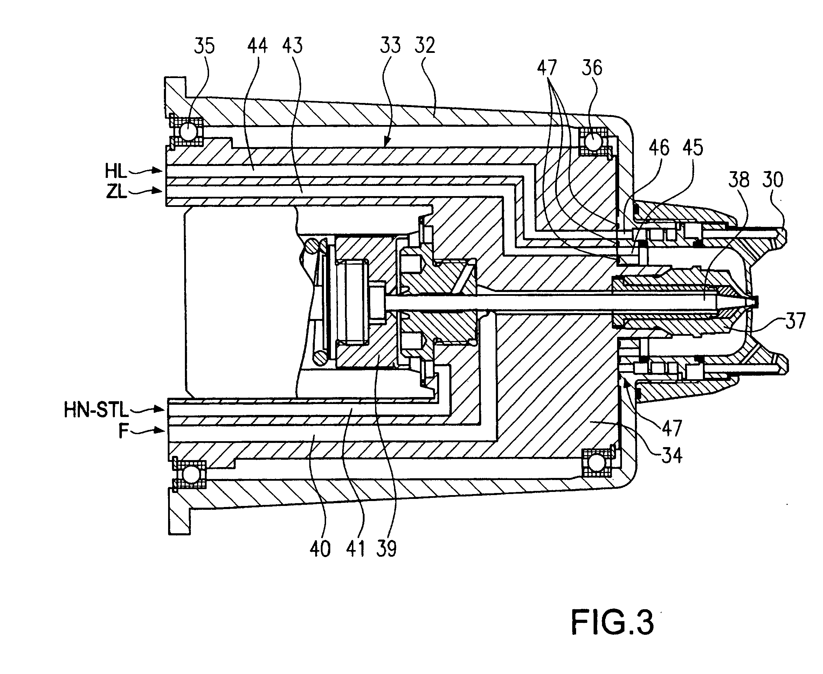

Das Ausführungsbeispiel nach Fig. 3 unterscheidet sich von dem nach Fig. 1 und 2 im wesentlichen nur dadurch, dass das an dem Roboter oder sonstigen mehrachsigen Bewegungsautomaten angebrachte Arbeitsgerät anstelle des Hochrotationszerstäubers ein Luftzerstäuber ebenfalls an sich bekannter Art und Funktionsweise ist. Die Luftkappe 30 dieses Zerstäubers ist über dessen zylindrisches Außengehäuse 32 zum Auslenken des Sprühstrahls starr beispielsweise an einem Handgelenk der Manipulatormaschine befestigt. In dem Außengehäuse 32 ist drehbar der von den Drehbewegungen der Maschine entkoppelte Innenteil 33 des Zerstäubers gelagert, zu dem hier ein zylindrisches Ventilgehäuse 34 und die an dem Ventilgehäuse befestigte Farbdüse 37 mit der zugehörigen axial bewegbaren (üblicherweise als Hauptnadel bezeichneten) Ventilnadel 38 und deren Antrieb 39 gehören. Die beiden Drehlager 35 und 36 sind zweckmäßig an den axialen Enden des Ventilgehäuses 34 zwischen ihm und der Innenseite des Außengehäuses 32 angeordnet.

Der Farbweg dieses Zerstäubers für das Beschichtungsmaterial F verläuft vollständig durch den Innenteil 33, nämlich von der Stelle seines Anschlusses an den durch die Maschine geführten Farbschlauch durch den Kanal 40 entlang der Ventilnadel 38 bis in die Farbdüse 37. Der Farbweg ist also vollständig von den Maschinendrehbewegungen entkoppelt. Dasselbe gilt für den im Ventilgehäuse 34 endenden Kanal 41 für die Hauptnadel-Steuerluft HN-STL. Die Wege für die bei Luftzerstäubern ferner benötigte Zerstäuberluft ZL bzw. Hörnerluft HL führen dagegen zunächst in Kanäle 43 bzw. 44 innerhalb des drehbar gelagerten Innenteils 33 und aus diesem dann in Ringkanäle 45 bzw. 46 in dem starr mit dem Abtriebsflansch der Maschine verbundenen, also relativ zu dem Innenteil 33 feststehenden Außengehäuse 32. Für die Zerstäuber- und Hörnerluftkanäle sind deshalb interne, in den Zerstäuber integrierte abdichtende Drehdurchführungen z. B. mit Gleitringdichtungen erforderlich, die darstellungsgemäß bei 47 an den Ringkanälen 45 und 46 zwischen der düsenseitigen Stirnfläche des Ventilgehäuses 34 und der ihm zugewandten Innenfläche des Außengehäuses 37 angeordnet sind.

Fig. 4 zeigt als weiteres Ausführungsbeispiel einen Luftzerstäuber mit einer etwas anderen Konstruktion als in Fig. 3. Hier ist der gesamte Zerstäuberkopf mit der Luftkappe 30', der Farbdüse 37', der Ventilnadel 38' und deren Antrieb 39' an der Verbindungsebene 50 starr mit dem Außengehäuseteil 32' und dadurch mit dem Abtriebsflansch der Manipulatormaschine verbunden. Der in dem Außengehäuseteil 32' drehbar mittels der Drehlager 35' und 36' gelagerte Innenteil 33' besteht hier lediglich aus einem Anschlussblock 52, durch den die verschiedenen Kanäle, die an die durch die Maschine geführten Schläuche angeschlossen sind, in den relativ zu ihnen stationären Zerstäuberteil führen, also in dessen Außengehäuseteil 32' und von dort in den Zerstäuberkopf. Der Anschlussblock kann daneben auch (nicht dargestellte) Ventile, elektrische Anschlüsse und Leitungen usw. enthalten.

Darstellungsgemäß sind die Kanäle 43' und 44' für die Zerstäuberluft bzw. Hörnerluft über Ringkanäle 45' bzw. 46' und wieder über an sich konventionelle abdichtende Drehdurchführungen mit Gleitring- oder sonstige gleitende Dichtungen 47' an Kanäle 45'' bzw. 46'' im Außengehäuseteil 32' angeschlossen, die sich bis in den Zerstäuberkopf fortsetzen. An der Verbindungsebene 50 sind diese Kanäle 45'', 46'' durch feststehende Dichtungen abgedichtet. Ähnlich setzt sich darstellungsgemäß der ankommende Kanal 41' für die Hauptnadel-Steuerluft HN-STL über einen für Drehung abgedichteten Ringkanal 54 bis zu dem Ventilantrieb 39' fort.

Da bei diesem Ausführungsbeispiel der Farbweg für das Beschichtungsmaterial F aus innerhalb des Zerstäubers relativ zueinander drehbaren Kanälen 40' und 56 besteht, ist hier innerhalb des Zerstäubers auch eine drehende Abdichtung für den Farbkanal erforderlich, die aber durch die bei 58 dargestellte, zentral koaxial zur Drehachse des Innenteils 33' angeordnete Drehdurchführung realisiert ist. Ähnlich wie die anderen Kanäle sind die bezüglich des entkoppelten Innenteils 33' feststehenden Farbkanalteile an der Verbindungsebene 50 gegeneinander abgedichtet.

Wie bei den anderen Ausführungsbeispielen ergibt sich auch bei dem mit einer Drehdurchführung versehenen Farbkanal des Zerstäubers nach Fig. 4 der Vorteil eines durchgehend im wesentlichen totraumfreien Weges, der beispielsweise bei einem Farbwechsel problemlos und mit wenig Aufwand gespült werden kann.

Die Erfindung eignet sich nicht nur für Lackierroboter, sondern z. B. auch für Lackier- und andere Maschinen, bei denen eine mehrfache Drehung des Zerstäubers bzw. sonstigen Arbeitsgeräts nicht erforderlich ist. In solchen Fällen treten als besonderer Vorteil die schonende, weil torsionsfreie Handhabung der Leitungsanordnung und die hieraus resultierende Produktivitätsverbesserung in den Vordergrund.

Es sind auch Anwendungsfälle denkbar, bei denen es zweckmäßig sein kann, innerhalb des Arbeitsgerätes eine mechanische Schnittstelle vorzusehen, an denen der eine Teil des Gerätes, in der Regel der vordere Teil, selbsttätig von dem restlichen Teil lösbar ist, beispielsweise für automatisch gesteuerten Werkzeugwechsel oder als Kollisionsschutz und/oder zur Überlastsicherung. Bei dem Ausführungsbeispiel nach Fig. 4 könnte die Schnittstelle zweckmäßig an der Verbindungsebene 50 liegen. Im Fall von Zerstäubern könnte auf diese Weise der Zerstäuberkopf in einem automatischen Werkzeugwechselsystem gegen ein anderes Werkzeug ausgewechselt werden, etwa gegen einen anderen Zerstäuberkopf oder auch gegen ein Messgerät usw. Ein Kollisionsschutz vermeidet Schäden beim Anstoßen des Arbeitsgerätes an externe Hindernisse. Ein Überlastschutz ist insbesondere dann sinnvoll, wenn es sich bei dem von der Maschine zu bewegenden Arbeitsgerät um ein Werkzeug handelt, das bei der Arbeit durch Bearbeitungskräfte und Momente belastet wird.

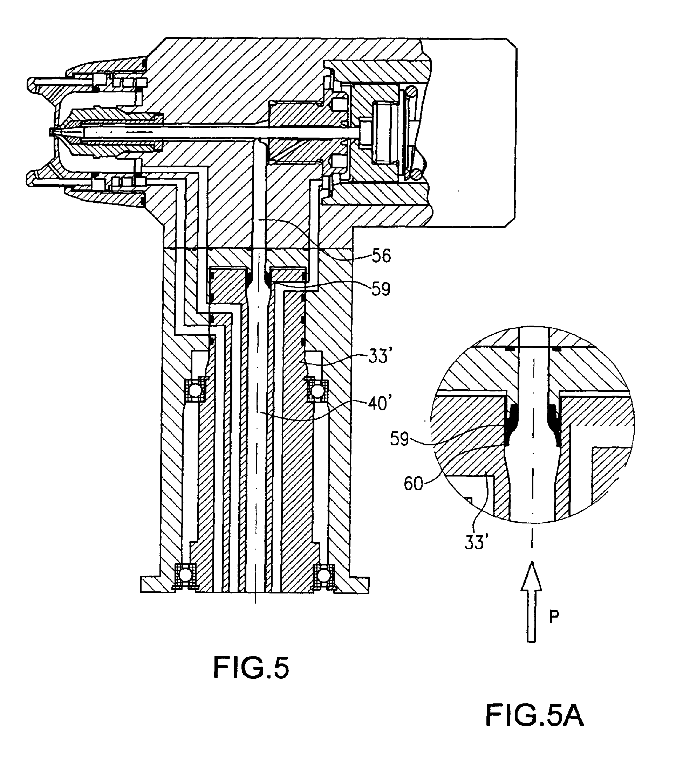

Fig. 5 zeigt eine Ausführungsform eines Luftzerstäubers, die weitgehend mit dem Zerstäuber nach Fig. 4 übereinstimmt, von dem sie sich aber hinsichtlich der drehenden Abdichtung für die relativ zueinander drehbaren Kanäle 40' und 56 des Farbweges unterscheidet. Anstelle der Drehdurchführung 58 in Fig. 4 ist hier die Manschetten- oder Lippendichtung 59 mit der in Fig. 5A vergrößert dargestellten Form und Anordnung vorgesehen.

Ein wesentliches Merkmal dieser koaxial zur Drehachse angeordneten manschettenartigen Dichtung 59 besteht darin, dass ihre ringförmige, nach außen gewölbte Lippe an der Wand des Farbkanals 40 des drehbar gelagerten Innenteils 33' mit einer leichten radialen Vorspannung anliegt. Diese Vorspannung der beispielsweise aus UHMWPE (Polyethylen mit ultrahoher Molmasse) oder einem geeigneten Fluorkunststoff (PTFE) bestehenden Dichtlippe kann bekanntlich durch spezielle Herstellungsverfahren erzielt werden, bei denen das Memory-Verhalten des Werkstoffs genutzt wird. Derartige Dichtungen haben herausragende Gleiteigenschaften bei der Abdichtung nicht nur von Schiebebewegungen, sondern auch bei Dreh- und Schwenkbewegungen, können axiales Spiel kompensieren, zeichnen sich durch äußerst geringen Verschleiß und damit hohe Lebensdauer aus und haben den zusätzlichen Vorteil, dass steigender Druck p (Fig. 5A) in dem abgedichteten Kanal die auf die Dichtlippe wirkende Anpresskraft und damit die Dichtwirkung erhöht. Außerdem ist die dargestellte Dichtung relativ totraumfrei und entsprechend gut spülbar. Solche Dichtungen mit radial nach außen vorgespannten Lippen können nicht nur bei der hier beschriebenen Drehentkopplung, sondern allgemeiner auch in anderen Fällen zweckmäßig sein, bei denen relativ zueinander verschiebbare, drehbare und/oder schwenkbare Teile gegen einander abgedichtet werden sollen.

Wie erläutert wurde, ist erfindungsgemäß zumindest der Teil des Arbeitsgerätes, an dem die Leitungsanordnung befestigt ist, relativ zu dem ersten Komponentenglied der Maschine drehbar gelagert. Die beschriebenen Ausführungsbeispiele, bei denen Teile eines Zerstäubers relativ zueinander drehbar sind, also z. B. der Innenteil relativ zu dem Außengehäuse, können im Rahmen der Erfindung auch dahingehend abgewandelt werden, dass die Relativdrehung zwischen dem gesamten Zerstäuber und der mechanischen Schnittstelle (Befestigungsflansch) der Maschine erfolgt.

## Patentansprüche

1. Automatisch gesteuerte mehrachsige Manipulatormaschine mit einem applikationsgerät (11) für eine Beschichtungsanlage,
mit mindestens zwei insbesondere hohlen Komponentengliedern (1, 4, 5, 6), von denen das erste Glied (6), an dem das von der Maschine zu bewegende Applikationsgerät (11) angebracht ist, relativ zu dem zweiten Glied (1, 4, 5) verdrehbar ist,
und mit einer an den Komponentengliedern (1, 4, 5, 6) oder durch diese hindurch zu dem Applikationsgerät (11) geführten Leitungsanordnung (20, 21), die durch mehrere Leitungen gebildet und an einem Teil (13, 33) des Applikationsgerätes (11) befestigt ist,
**dadurch gekennzeichnet, dass** der Teil (13, 33) des Applikationsgerätes (11), an dem die Leitungen (20, 21) befestigt sind, relativ zu dem ersten Komponentenglied (6) drehbar gelagert ist, wobei
die Leitungsanordnung (20, 21) an einem Innenteil (13, 33) des Applikationsgerätes (11) befestigt ist, der drehbar in einem Außengehäuse (12, 32) gelagert ist, das starr mit dem ersten Komponentenglied (6) verbunden ist,
und/oder wobei die Leitungsanordnung relativ zu einem Teil (30) des Applikationsgerätes drehbar ist, mit dem mindestens eine der Leitungen (43, 44) über einen Ringkanal (45, 46) verbunden ist.

2. Maschine nach Anspruch 1, **dadurch gekennzeichnet, dass** die zu dem Applikationsgerät (11) führende Leitungsanordnung (20, 21) Versorgungsschläuche für flüssige und/oder gasförmige Medien und/oder Signalleitungen enthält.

3. Maschine nach einem der vorangehenden Ansprüche, **dadurch gekennzeichnet, dass** eine flexible Welle zum Aufnehmen von Drehmomenten parallel zu der Leitungsanordnung (20, 21) durch die Komponentenglieder (1, 4, 5, 6) geführt und an dem drehbar gelagerten Teil (13, 33) des Applikationsgerätes (11) befestigt ist.

4. Maschine nach einem der vorangehenden Ansprüche, **dadurch gekennzeichnet, dass** das Handgelenk (2) eines Roboters bildende Komponentenglieder (4, 5, 6) vorhanden sind.

5. Maschine nach einem der vorangehenden Ansprüche, **dadurch gekennzeichnet, dass** das Applikationsgerät (11) ein von einem Beschichtungsroboter bewegbares Zerstäuber- oder sonstiges Applikationsgerät ist, in dessen starr mit dem Roboterhandgelenk (2) verbundenem Außengehäuse (12, 32) der an die Leitungsanordnung (20, 21) angeschlossene Innenteil (13, 33) des Gerätes (11) drehbar gelagert ist.

6. Maschine nach einem der vorangehenden Ansprüche, **dadurch gekennzeichnet, dass** zwischen der Außenseite des an die Leitungsanordnung (20, 21) angeschlossenen Innenteils (13, 33) des Applikationsgerätes (11) und dessen starr mit dem ersten Komponentenglied (6) verbundenen Außengehäuse (12, 32) ein kreisförmiger Ringspalt (27) oder Ringkanal (45, 46) für ein durch das Gerät zu leitendes Medium gebildet ist, der durch zwischen der Innenseite des Außengehäuses (12, 32) und der Außenseite des Innenteils (13, 33) sitzende gleitende Dichtungen (28, 29, 47) begrenzt ist, die an dem Gehäuse (12, 32) und an dem Innenteil (13, 33) anliegen.

7. Maschine nach einem der vorangehenden Ansprüche, **dadurch gekennzeichnet, dass** für mindestens eine Leitung für ein durch das Applikationsgerät nach außen zu leitendes Medium (F, ZL, HL) innerhalb des Applikationsgerätes eine abdichtende Drehdurchführung (58, 47, 47', 59) vorhanden ist, wobei das Medium durch einen längs einer Mittelachse des Applikationsgerätes verlaufenden zentralen Kanal (40', 56) oder durch einen Ringkanal (27, 45, 46, 45', 46') geleitet wird.

8. Maschine nach Anspruch 7, **dadurch gekennzeichnet, dass** mindestens eine zusätzliche Drehdurchführung für mindestens eine in dem Applikationsgerät endende Leitung (41, 41') vorgesehen sind.

9. Maschine nach einem der vorhergehenden Ansprüche, **dadurch gekennzeichnet, dass** das Applikationsgerät, z. B. ein Zerstäuber für Beschichtungsmaterial, an einer mechanischen Schnittstelle der Maschine, z. B. am Endglied des Handgelenks eines Roboters, als Ganzes relativ zu dieser Schnittstelle drehbar gelagert ist.

## Claims

1. An automatically controlled multiple-axis manipulating machine with an application device (11) for a coating system,
with at least two, especially hollow, component members (1, 4, 5, 6), of which the first member (6), to which is attached the application device (11) to be moved by the machine, can rotate with respect to the second member (1, 4, 5),
and with a line arrangement (20, 21) guided at the components (1, 4, 5, 6) or through them to the application device (11), where said line arrangement is formed by a plurality of lines, and is attached to a part (13, 33) of the application device (11),
**characterised in that** the part (13, 33) of the application device (11), to which the lines (20, 21) are attached, is rotatably mounted with respect to the first component (6), wherein
the line arrangement (20, 21) is attached to an inner part (13, 33) of the application device (11), which is mounted so as to rotate in an outer housing (12, 32), which is rigidly connected to the first component (6) and/or wherein the line arrangement can rotate with respect to a part (30) of the application device to which at least one of the lines (43, 44) is connected through an annular passage (45, 56).

2. A machine according to Claim 1, **characterised in that** the line arrangement (20, 21) leading to the application device (11) contains supply tubes for liquid- and/or gaseous media and/or signal lines.

3. A machine according to one of the preceding claims, **characterised in that** a flexible shaft for absorbing torques is guided parallel to the line arrangement (20, 21) through the component members (1, 4, 5, 6) and is attached to the rotabably mounted part (13, 33) of the application device (11).

4. A machine according to one of the preceding claims, **characterised in that** component members (4, 5, 6) are present that form the wrist (2) of a robot.

5. A machine according to one of the preceding claims, **characterised in that** the application device (11) is an atomiser or other application device that can be moved by a coating robot, in whose outer housing (12, 32), which is rigidly connected to the robot wrist (2), the inner part (13, 33) of the device (11), that is attached to the line arrangement (20, 21), is rotatably mounted

6. A machine according to one of the preceding claims, **characterised in that** between the outer surface of the inner part (13, 33), attached to the line arrangement (20, 21), of the application device (11), and its outer housing (12, 32) which is rigidly connected to the first component member (6), a circular annular gap (27) or annular passage (45, 46) is formed for a medium to be conducted through the device, which annular gap or annular passage is defining by sliding seals (28, 29, 47) seated between the inner surface of the outer housing (12, 32) and the outer surface of the inner part (13, 33), which seals contact the housing (12, 32) and the inner part (13, 33).

7. A machine according to one of the preceding claims, **characterised in that** for at least one line for a medium (F, ZL, HL) to be conducted towards the exterior, a sealing rotary bush (58, 47, 47', 59) is present within an application device, wherein the medium is conducted through a central channel (40', 56) extending longitudinally along a central axis of the application device or an annular passage (27, 45, 46, 45', 46').

8. A machine according to Claim 7, **characterised in that** at least one additional rotary bush is present for at least one line (41, 41') ending in the application device.

9. A machine according to one of the preceding claims, **characterised in that** the application device, eg an atomiser for coating material, is mounted on a mechanical interface of the machine, eg on the end member of the wrist of a robot, to rotate bodily with respect to this interface.

## Revendications

1. Manipulateur multiaxial commandé automatiquement avec un appareil d'application (11) pour une installation d'enduction,
avec au moins deux éléments de composants (1, 4, 5, 6), notamment creux, dont le premier élément (6), sur lequel est monté l'appareil d'application (11) destiné à être déplacé par le manipulateur, peut tourner par rapport au deuxième élément (1, 4, 5),
et avec un système de conduites (20, 21) posé sur les éléments de composants (1, 4, 5, 6) ou les traversant vers l'appareil d'application (11) qui est formé par plusieurs conduites et qui est fixé sur une partie (13, 33) de l'appareil d'application (11),
**caractérisé en ce que** la partie (13, 33) de l'appareil d'application (11) sur laquelle sont fixées les conduites (20, 21) est logée de manière rotative par rapport au premier élément de composant (6),
le système de conduites (20, 21) étant fixé sur une partie intérieure (13, 33) de l'appareil d'application (11) qui est logée de manière rotative dans un boîtier extérieur (12, 32) qui est relié rigidement avec le premier élément de composant (6),
et/ou le système de conduites étant logé de manière rotative par rapport à une partie (30) de l'appareil d'application avec laquelle au moins l'une des conduites (43, 44) est reliée par l'intermédiaire d'un conduit annulaire (45, 46).

2. Manipulateur selon la revendication 1, **caractérisé en ce que** le système de conduites (20, 21) conduisant à l'appareil d'application (11) comprend des tuyaux flexibles d'alimentation pour des fluides liquides et/ou gazeux et/ou des lignes de signalisation.

3. Manipulateur selon l'une quelconque des revendications précédentes, **caractérisé en ce qu'**un arbre flexible traverse les éléments de composants (1, 4, 5, 6) parallèlement au système de conduites (20, 21) pour absorber les couples de rotation et est fixé à la partie (13, 33) de l'appareil d'application (11) logée de manière rotative.

4. Manipulateur selon l'une quelconque des revendications précédentes, **caractérisé en ce qu'**il est prévu des éléments de composants (4, 5, 6) formant le joint de poignet (2) d'un robot.

5. Manipulateur selon l'une quelconque des revendications précédentes, **caractérisé en ce que** l'appareil d'application (11) est un appareil d'application par pulvérisation ou un autre appareil d'application déplaçable au moyen d'un robot d'enduction dans le boîtier extérieur (12, 32), relié rigidement au joint de poignet (2) du robot, duquel la partie intérieure (13, 33) de l'appareil (11) raccordée au système de conduites (20, 21) est logée de manière rotative.

6. Manipulateur selon l'une quelconque des revendications précédentes, **caractérisé en ce qu'**un espace annulaire circulaire (27) ou conduit annulaire (45, 46) pour un fluide à diriger à travers l'appareil est formé entre le côté extérieur de la partie intérieure (13, 33) de l'appareil (11) raccordée au système de conduites (20, 21) et le boîtier extérieur (12, 32) de celui-ci relié rigidement au premier élément de composant (6), lequel espace est délimité par des garnitures d'étanchéité à glissement (28, 29, 47) placées entre le côté intérieur du boîtier extérieur (12, 32) et le côté extérieur de la partie intérieure (13, 33) qui s'appuient sur le boîtier (12, 32) et sur la partie intérieure (13, 33).

7. Manipulateur selon l'une quelconque des revendications précédentes, **caractérisé en ce qu'**il est prévu à l'intérieur de l'appareil d'application un passage tournant d'étanchéité (58, 47, 47', 59) pour au moins une conduite pour un fluide (F, ZL, HL) à diriger vers l'extérieur à travers l'appareil d'application, le fluide étant dirigé à travers un conduit central (40', 56) s'étendant le long d'un axe médian de l'appareil d'application ou à travers un espace annulaire (27, 45, 46, 45', 46').

8. Manipulateur selon la revendication 7, **caractérisé en ce qu'**il est prévu au moins un passage tournant supplémentaire pour au moins une conduite (41, 41') se terminant dans l'appareil d'application.

9. Manipulateur selon l'une quelconque des revendications précédentes, **caractérisé en ce que** l'appareil d'application, par exemple un pulvérisateur pour un produit d'enduction, est logé dans une interface mécanique du manipulateur, par exemple dans l'élément d'extrémité du joint de poignet d'un robot, de manière rotative comme un ensemble par rapport à cette interface.
